# DEMANDE DE BREVET EUROPEEN

(11) **EP 1 458 074 A1**
(43) Date de publication de la demande: **15.09.2004**
(21) Numéro de dépôt: 04290671.9
(22) Date de dépôt: 11.03.2004
(51) Int. Cl.: H02G 3/12

(54) **Boîte d'encastrement en deux parties pour appareillage électrique**

(30) Priorité: 14.03.2003 FR 0303184
(71) Demandeur: LEGRAND, 87000 Limoges (FR); LEGRAND SNC, 87000 Limoges (FR)
(72) Inventeur: Favalessa, Thierry, 87240 Ambazac (FR); Gourcerol, Jean-Jacques, 87220 Feytiat (FR)
(74) Mandataire: Santarelli

(57) **Abrégé**

La présente invention concerne une boîte d'encastrement (100) d'au moins un appareillage électrique à rapporter sur une paroi, comprenant une partie arrière (110) à placer dans un trou pratiqué dans ladite paroi, cette partie arrière formant un logement (113) ouvert apte à accueillir au moins un mécanisme d'appareillage électrique,

Selon l'invention, elle comprend une partie avant (120) apte à être rapportée sur la partie arrière, cette partie avant comprenant :
- à sa périphérie, au moins une portion d'appui (122) apte à prendre appui sur ladite paroi, et
- des moyens de montage (123) dudit mécanisme appareillage électrique.

## Description

La présente invention concerne de manière générale les boîtes d'encastrement d'appareillages électriques à placer dans une paroi dure du type paroi en briques ou en carreaux de plâtre et à sceller avec un produit de scellement ajouté.

On entend ici par boîte d'encastrement tout type de boîtes, notamment des boîtes d'encastrement classiques destinées à recevoir des appareillages électriques tels que des interrupteurs et des prises de courant, mais aussi des boîtes de dérivation pour câbles et/ou conducteurs électriques qui contiennent des coupe-circuits.

Elle concerne plus particulièrement une boîte d'encastrement comprenant une partie arrière à placer dans un trou pratiqué dans ladite paroi, cette partie formant un logement ouvert apte à accueillir au moins un mécanisme d'appareillage électrique.

Elle concerne également un procédé d'encastrement d'un appareillage électrique dans une paroi à l'aide d'une telle boîte d'encastrement.

Dans les boîtes d'encastrement du type précité déjà connues, le mécanisme d'appareillage électrique est directement fixé sur la partie arrière formant ledit logement et placée dans ledit trou de la paroi correspondante.

Une boîte d'encastrement de ce type est notamment décrite dans le document FR 2 734 670.

Toutefois, lorsque la partie arrière d'une telle boîte d'encastrement connue, scellée dans le trou correspondant de la paroi, n'est pas d'aplomb ou n'est pas correctement positionnée par rapport à la face externe de ladite paroi, l'installateur a du mal à fixer le mécanisme d'appareillage électrique sur cette partie arrière pour que la plaque enjoliveur de l'appareillage électrique fixée sur ce mécanisme d'appareillage soit correctement positionnée sur la face externe de la paroi en question.

En outre, l'installateur doit prendre des précautions particulières pour protéger l'intérieur du logement ouvert de la partie arrière d'une telle boîte d'encastrement afin d'éviter que le revêtement de finition qui recouvre la paroi ne remplisse ledit logement.

Une de ces précautions consiste notamment à bourrer l'intérieur du logement de la partie arrière de la boîte d'encastrement avec un papier de bourrage.

Sinon, après finition de la paroi considérée, l'installateur aura les plus grandes difficultés à dégager ledit logement pour y placer le mécanisme d'appareillage électrique.

En tout état de cause, après que la paroi qui contient la boîte d'encastrement a été recouverte par son revêtement de finition, ladite boîte d'encastrement est difficilement retrouvable par l'installateur.

Afin de remédier aux inconvénients précités, la présente invention propose une boîte d'encastrement, telle que définie en introduction, caractérisée en ce qu'elle comprend outre la partie arrière, une partie avant apte à être rapportée sur la partie arrière, cette partie avant comprenant :
- à sa périphérie, au moins une portion d'appui apte à prendre appui sur la face externe de ladite paroi, et
- des moyens de montage dudit mécanisme d'appareillage électrique.

Avantageusement, cette partie avant, qui prend appui sur la face externe de la paroi et qui comporte les moyens de montage du mécanisme d'appareillage électrique, permet de monter correctement, à l'aplomb de ladite paroi, le mécanisme d'appareillage correspondant quels que soient les défauts de positionnement de la partie arrière de ladite boîte d'encastrement dans le trou de ladite paroi.

En d'autres termes, la partie avant de la boîte d'encastrement selon l'invention qui sert de support de montage du mécanisme d'appareillage électrique, par son appui sur la paroi, corrige les défauts de positionnement dans ledit trou de la partie arrière de ladite boîte recevant le mécanisme d'appareillage électrique.

En outre, la partie avant de la boîte d'encastrement selon l'invention peut former temporairement un bouchon qui permet de protéger le logement de la partie arrière lors de la phase de finition de la paroi dans laquelle la boîte d'encastrement est scellée.

D'autres caractéristiques non limitatives et avantageuses de la boîte d'encastrement selon l'invention sont les suivantes :
- la partie avant comporte des orifices traversants pour l'injection dans le trou d'un produit de scellement de ladite boîte d'encastrement ;
- la partie arrière et la partie avant comprennent des moyens de montage complémentaires pour le montage de la partie avant sur la partie arrière, ces moyens de montage étant aptes à autoriser un ajustement de la position en hauteur et de la position angulaire de la partie avant par rapport à la partie arrière ;
- lesdits moyens de montage complémentaires sont des moyens de clipage ;
- lesdits moyens de clipage complémentaires comprennent, sur l'une des deux pièces constituées par la partie arrière et la partie avant, des pattes munies de crans et, sur l'autre des deux pièces, des rainures dans lesquelles sont aptes à glisser lesdites pattes munies de crans et des dents aptes à coopérer avec les crans desdites pattes ;
- la partie avant est apte à obturer ledit logement de ladite partie arrière et comporte en son centre une portion ouvrable pour accéder à l'intérieur dudit logement de la partie arrière ;
- ladite portion ouvrable de la partie avant comprend un renfoncement formant un logement pour le stockage de vis prévues pour la fixation du mécanisme d'appareillage électrique sur ladite partie avant ;
- le renfoncement est obturé par un tampon retirable, imprégné d'un liquide coloré ;
- ladite portion ouvrable de la partie avant est une portion défonçable ;
- ladite partie avant comporte à sa périphérie trois portions d'appui disposées en triangle ;
- chaque portion d'appui se présente sous la forme d'une oreille faisant saillie du bord de la partie avant ;
- lesdits orifices traversants de la partie avant sont situés à la base des portions d'appui ;
- chaque portion d'appui comporte un trou apte à recevoir une pointe d'ancrage pour la fixation de la partie avant à la paroi ;
- lesdits moyens de montage dudit mécanisme d'appareillage électrique comprennent des puits de réception de vis ;
- lesdits puits sont positionnés sur le bord de la portion ouvrable; et
- la partie arrière et la partie avant sont chacune réalisées d'une seule pièce par moulage d'une matière plastique.

L'invention propose également un procédé d'encastrement d'un appareillage électrique dans une paroi à l'aide d'une boîte d'encastrement, comprenant les étapes selon lesquelles :
a) on réalise un trou dans ladite paroi,
b) on positionne dans le trou la partie arrière d'une boîte d'encastrement selon l'invention,
c) on raccorde à ladite partie arrière des gaines d'amenée de câbles et/ou de conducteurs électriques, et on tire de ces gaines les câbles et/ou les conducteurs électriques pour les insérer dans ledit logement ouvert de ladite partie arrière,
d) on rapporte ladite partie avant de la boîte d'encastrement sur ladite partie arrière de telle sorte que chaque portion d'appui de ladite partie avant prend appui sur la paroi,
e) on injecte, via les orifices traversants de la partie avant, le produit de scellement pour sceller la boîte d'encastrement dans le trou de la paroi,
f) après que ladite paroi a été recouverte d'une couche de revêtement murale, on dégage au moins la portion ouvrable de la partie avant de la boîte d'encastrement,
g) on ouvre ladite partie ouvrable pour accéder à l'intérieur dudit logement de la partie arrière contenant les câbles et/ou les conducteurs électriques,
h) on rapporte dans le logement de la partie arrière le mécanisme d'appareillage électrique que l'on fixe avec des vis sur la partie avant, et
i) on fixe la plaque enjoliveur de l'appareillage électrique de façon à ce qu'elle prenne appui sur la paroi.

Selon d'autres caractéristiques avantageuses du procédé selon l'invention :
- à l'étape b) on maintient la partie arrière de la boîte d'encastrement dans le trou pratiqué dans la paroi à l'aide d'un produit de collage du type mastic ;
- à l'étape d) on ajuste la position en hauteur et la position angulaire de la partie avant par rapport à la partie arrière de la boîte d'encastrement ; et
- le produit de scellement injecté au travers des orifices de la partie avant est une mousse de polyuréthane.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une boîte d'encastrement selon l'invention ; et
- les figures 2A à 2E représentent schématiquement les différentes étapes du procédé d'encastrement selon l'invention.

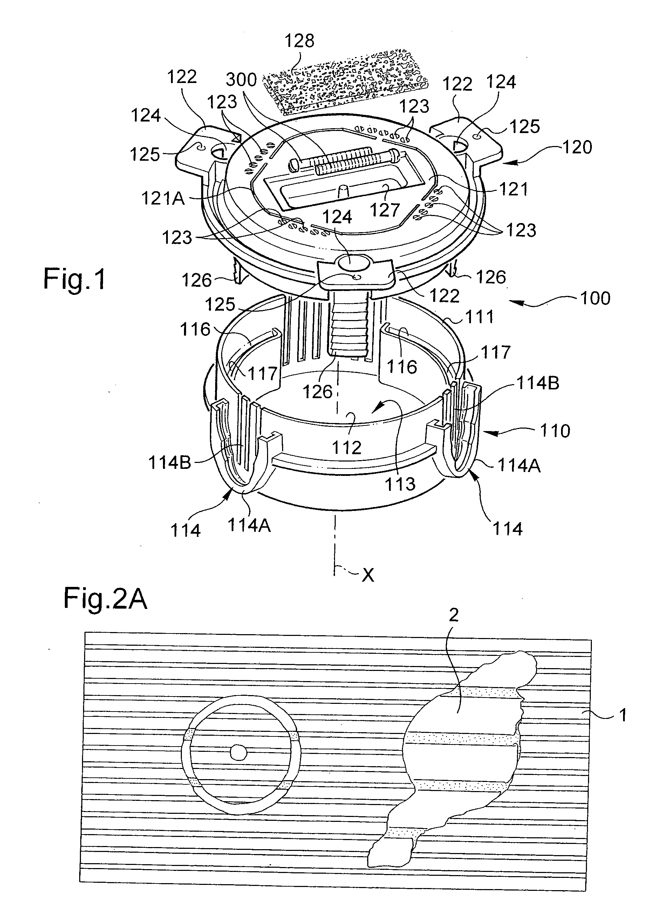

Sur la figure 1, on a représenté une boîte d'encastrement 100 d'un appareillage électrique (non représenté) à placer dans une paroi dure du type paroi en briques ou en carreaux de plâtre et à sceller avec un produit de scellement ajouté.

Cette boîte d'encastrement 100 comprend une partie arrière 110 à placer dans un trou 2 pratiqué dans la paroi 1 (voir figure 2A).

Cette partie arrière 110 comporte une paroi latérale 111 qui s'élève à partir d'un fond 112. La paroi latérale 111 délimite avec le fond 112 un logement 113 ouvert apte à accueillir le mécanisme d'appareillage électrique concerné ainsi que les câbles et/ou les conducteurs électriques nécessaires à son alimentation. A cet effet, la partie arrière 110 comporte, à l'opposé du fond 112, une ouverture frontale qui permet d'introduire l'appareillage électrique à l'intérieur dudit logement.

La paroi latérale 111 de la partie arrière 110 de la boîte d'encastrement 100 est ici une paroi cylindrique de révolution autour d'un axe X. Elle borde le fond 112 circulaire.

La paroi latérale 111 de la boîte d'encastrement 100 est pourvue d'une pluralité d'aménagements 114 répartis à des endroits distincts sur toute sa surface et aptes à accueillir, de manière étanche à un produit de scellement, l'extrémité coupée d'une gaine 10 de transport de câbles et/ou de conducteurs électriques 11, et à autoriser l'entrée des câbles et/ou des conducteurs électriques 11, tirés de la gaine 10 correspondante, à l'intérieur du logement 113 de la partie arrière 110 pour réaliser le branchement électrique du mécanisme d'appareillage logé dans le logement 113.

Avantageusement, chaque aménagement 114 de la paroi latérale 111 de la partie arrière 110 de la boîte d'encastrement 100 comprend, d'une part, en saillie sur la face externe de cette paroi latérale 111, une nervure en V 114A qui définit entre ses branches un logement apte à accueillir l'extrémité coupée de la gaine considérée, et, d'autre part, au droit du logement défini entre les branches de la nervure en V 114A, un agencement 114B de ladite paroi latérale 111 autorisant les câbles et/ou les conducteurs électriques en provenance de la gaine rapportée sur la nervure en V 114A à traverser ladite paroi latérale 111 pour entrer dans le logement 113 de la partie arrière 110 de la boîte d'encastrement 100 tout en assurant une étanchéité au produit de scellement entre l'intérieur et l'extérieur de celle-ci.

L'agencement 114B de la paroi latérale 111 comprend une série de fentes parallèles s'étendant parallèlement à l'axe X et définissant entre elles des lamelles.

Les fentes autorisent l'entrée dans le logement 113 de la partie arrière 110 des câbles et/ou des conducteurs électriques 11 en provenance de la gaine 10, et les lamelles forment l'étanchéité au produit de scellement entre l'intérieur et l'extérieur de la partie arrière 110 de la boîte d'encastrement 100.

Ces aménagements 114 de la paroi latérale 111 de la partie arrière 110 ne font pas partie de l'invention et ne seront pas décrits ici plus en détail.

En outre, selon l'invention, la boîte d'encastrement 100 comporte une partie avant 120 apte à être rapportée sur la partie arrière 110.

Cette partie avant 120 présente la forme globale d'un disque plein dont la surface est adaptée à obturer la surface de l'ouverture frontale circulaire du logement 113 défini à l'intérieur de la paroi cylindrique 111 de la partie arrière 110 de la boîte d'encastrement 100.

Cette partie avant 120 comprend, en son centre, une portion ouvrable 121 pour accéder à l'intérieur dudit logement 113 de la partie arrière 110, après que cette partie avant 120 a été montée sur la partie arrière 110.

Avantageusement, selon l'exemple représenté, cette portion ouvrable 121 de la partie avant 120 est une partie défonçable.

A cet effet, il est prévu, dans la partie avant 120, une ligne de prédécoupe 121A qui suit le contour de la portion ouvrable 121.

Par simple pression, l'installateur peut alors détacher la portion ouvrable 121 du reste de la partie avant 120 lorsqu'il le souhaite.

Préférentiellement, la portion ouvrable 121 de la partie avant 120 comprend un renfoncement 127 formant un logement pour le stockage de vis 300 prévues pour la fixation du mécanisme d'appareillage électrique sur la partie avant 120 de la boîte d'encastrement.

Ce renfoncement 127 est obturé avantageusement par un tampon 128 collé ou qui prend appui sur les bords du renfoncement. Ce tampon 128 est imprégné d'un liquide coloré comme de l'encre. Il est retirable pour permettre de dégager les vis 300 de fixation.

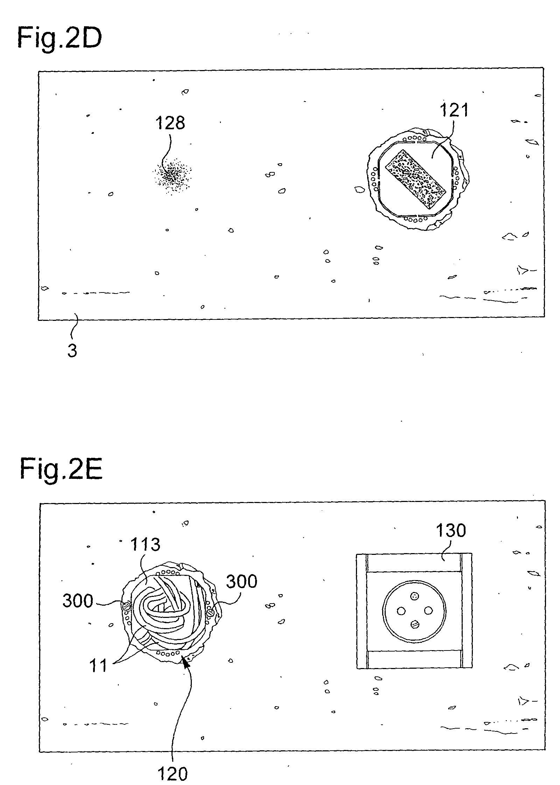

Le tampon 128 est réalisé en matière souple ou rigide. Le liquide coloré qui imprègne le tampon permet à celui-ci de constituer un repère de positionnement de la boîte d'encastrement 100 scellée dans la paroi 1 considérée, recouverte d'un revêtement de finition, comme cela sera expliqué ultérieurement en référence à la figure 2D.

Tant que les vis 300 de fixation ne sont donc pas utilisées, elles sont stockées dans le renfoncement 127 de la partie avant 120 de la boîte d'encastrement 100 et protégées par le tampon 128. Ainsi, l'installateur ne peut les perdre.

En outre, la partie avant 120 comporte à sa périphérie au moins une portion d'appui 122 apte à prendre appui sur la paroi 1 dans laquelle est logée la boîte d'encastrement 100.

Ici, la partie avant 120 comporte trois portions d'appui 122 qui se présentent sous la forme d'oreilles faisant saillie du bord circulaire de la partie avant 120 et disposées en triangle. Chacune des oreilles formant une portion d'appui 122 comporte un trou 125 apte à recevoir éventuellement une pointe d'ancrage ou un clou pour la fixation de la partie avant 120 à la paroi 1 considérée.

La partie avant 120 comporte également des moyens de montage 123 du mécanisme d'appareillage électrique (non représenté) logé dans le logement 113 de la partie arrière 110 au travers de l'ouverture de la partie avant 120 réalisée par ouverture de sa portion ouvrable 121.

Ces moyens de montage du mécanisme d'appareillage électrique comprennent des puits 123 de réception de vis 300 de fixation.

Ici, avantageusement, il est prévu sur les quatre côtés du bord de la portion ouvrable 121, c'est-à-dire sur les quatre côtés de la ligne de prédécoupe 121A, quatre séries de cinq puits 123 destinés à recevoir une vis 300 pour la fixation du mécanisme d'appareillage électrique sur la partie avant 120 de la boîte d'encastrement 100.

Ainsi, lors de la fixation du mécanisme d'appareillage électrique sur la partie avant 120, l'installateur peut ajuster au mieux les trous de réception des vis prévus dans le mécanisme d'appareillage électrique avec les puits 123 correspondants de la partie avant 120 pour positionner correctement ledit mécanisme sur cette dernière.

La partie arrière 110 et la partie avant 120 de la boîte d'encastrement 100 comprennent des moyens de montage complémentaires aptes à coopérer entre eux pour le montage de la partie avant 120 sur la partie arrière 110.

Préférentiellement, comme le montre la figure 1, ces moyens de montage complémentaires sont aptes à autoriser un ajustement de la position en hauteur et de la position angulaire de la partie avant 120 par rapport à la partie arrière 110.

Ces moyens de montage sont préférentiellement des moyens de clipage qui comprennent, ici, des pattes 126 munies de crans, portées par la face arrière de la partie avant 120. Ces pattes 126 sont placées à proximité du bord circulaire de la partie avant 120 et s'étendent perpendiculairement au plan de celle-ci. Elles sont dirigées en direction de la partie arrière 110.

En outre, lesdits moyens de clipage comprennent, sur la face interne de la paroi latérale 111 de la partie arrière 110, des dents 116, une par patte 126.

Chacune des dents 116 s'étend selon une portion de cercle et est apte à coopérer avec les crans d'une des pattes 126 de la partie avant 120. Ces dents 116 sont logées dans des rainures 117 s'étendant en arc de cercle, dans lesquelles sont aptes à glisser lesdites pattes 126 correspondantes munies des crans.

Ainsi, le montage de la partie avant 120 sur la partie arrière 110 de la boîte d'encastrement 100 est réalisé par l'insertion des pattes 126 munies des crans dans les rainures 117 de manière à faire coopérer les crans de chacune des pattes 126 avec la dent 116 correspondante.

L'ajustement en hauteur de la partie avant 120 sur la partie arrière 110 s'effectue par la coopération des crans de chaque patte 126 avec la dent 116 correspondante. En outre, l'ajustement angulaire de la partie avant 120 par rapport à la partie arrière 110 s'effectue par glissement de chacune des pattes 126 dans la rainure 117 en arc de cercle correspondante prévue sur la face interne de la paroi latérale 111 de la partie arrière 110 de la boîte d'encastrement 100.

Avantageusement, la partie avant 120 peut être ajustée en position sur la partie arrière 110 pour prendre appui correctement sur la face externe de la paroi quel que soit le bon ou le mauvais positionnement de la partie arrière 110 dans le trou de la paroi. De cette manière, la partie avant 120 permet de corriger les défauts de positionnement de la partie arrière 110 dans le trou considéré.

Avantageusement, la partie avant 120 comporte des orifices 124 traversants permettant l'injection dans le trou 2 de la paroi 1 du produit de scellement de cette boîte d'encastrement.

Selon l'exemple représenté, il est prévu trois orifices 124 situés à la base de chacune des portions d'appui 122 de la partie avant 120.

Chacune des parties arrière 110 et avant 120 de la boîte d'encastrement est réalisée d'une seule pièce par moulage en matière plastique.

En référence aux figures 2A à 2E, nous allons maintenant décrire le procédé d'encastrement d'un appareillage électrique dans une paroi 1 à l'aide de la boîte d'encastrement 100 représentée sur la figure 1.

Comme le montre la figure 2A, selon ce procédé, dans une première étape on réalise, à l'aide d'une scie cloche ou d'un tout autre outil de perçage, un trou 2 dans la paroi 1 considérée.

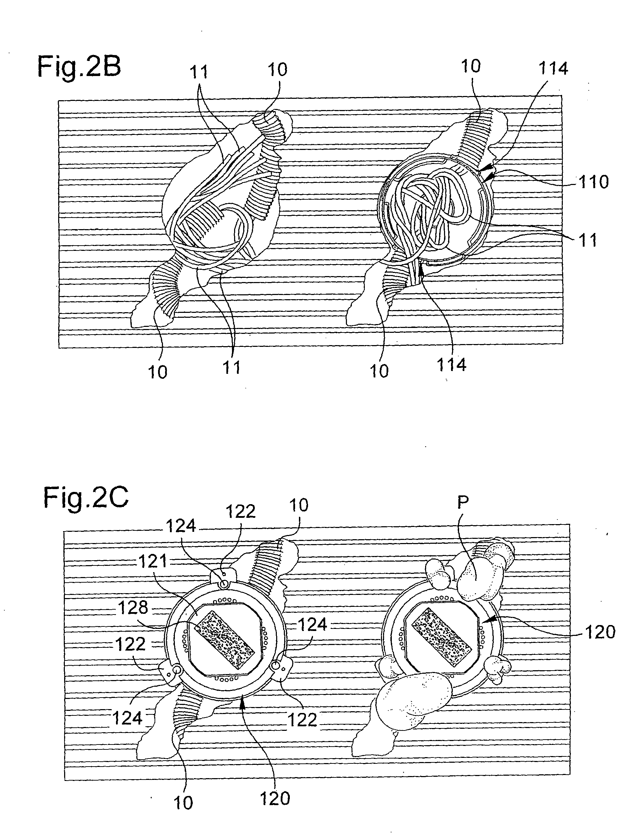

Puis, comme le montre la figure 2B, on amène dans ce trou les gaines 10 d'amenée de câbles et/ou de conducteurs électriques 11 permettant l'alimentation électrique de l'appareillage électrique à insérer dans la boîte d'encastrement 100 à l'endroit prévu.

On positionne alors dans le trou 2 la partie arrière 110 de la boîte d'encastrement 100 et on y raccorde les gaines 10 d'amenée de câbles et/ou de conducteurs électriques 11 (voir figure 2B), puis on tire de ces gaines 10 les câbles et/ou les conducteurs électriques 11 pour les insérer, via les aménagements 114 de la paroi latérale 111 de la partie arrière 110, dans le logement 113 ouvert de la partie arrière 110.

Bien entendu, lors du positionnement de la partie arrière 110 de la boîte d'encastrement 100 dans le trou 2, l'installateur peut avantageusement coller le fond 112 de cette partie arrière 110 dans le trou 2 à l'aide d'un produit de collage tel qu'un mastic pour maintenir correctement la partie arrière 110 dans ce trou 2.

Puis, comme le montre la figure 2C, on rapporte la partie avant 120 de la boîte d'encastrement 100 sur la partie arrière 110 de telle sorte que chaque portion d'appui 122 de la partie avant 120 prend appui sur la paroi 1.

A cet effet, l'installateur peut ajuster la position en hauteur et la position angulaire de la partie avant 120 par rapport à la partie arrière 110 de la boîte d'encastrement 100 notamment en faisant glisser les pattes 126 crantées dans les rainures 117 correspondantes, afin de placer correctement en appui les portions d'appui 122 de la partie avant 120 contre la face externe de la paroi 1.

Bien entendu, lors de cette étape, la portion ouvrable 121 de la partie avant 120 est encore en place et loge dans son renfoncement 127 les vis 300, prévues pour la fixation du mécanisme d'appareillage, protégées par le tampon 128.

Puis, comme le montre également la figure 2C, l'installateur injecte, via les orifices 124 traversants de la partie avant 120, le produit de scellement pour sceller la boîte d'encastrement 100 dans le trou 2 de la paroi 1.

Avantageusement, le produit de scellement injecté au travers des orifices 124 de la partie avant 120 est une mousse de polyuréthane P.

Puis, comme le montre la figure 2D, une fois que la paroi 1 a été recouverte d'une couche de revêtement murale 3 pour sa finition, ici une couche de plâtre, l'installateur repère, grâce au liquide de couleur imprégnant le tampon 128 qui s'est diffusé dans la couche de plâtre, la boîte d'encastrement 100 scellée dans ladite paroi 1 et dégage alors au moins la portion ouvrable 121 de la partie avant 120 de la boîte d'encastrement 100.

Il ouvre alors ladite portion ouvrable 121 par enfoncement de celle-ci pour accéder à l'intérieur du logement 113 de la partie arrière 110 contenant les câbles et/ou les conducteurs électriques 11. Il enlève les vis 300 du renfoncement 127 de la portion ouvrable détachée de la partie avant 120 de la boîte d'encastrement et positionne ces vis 300 dans les puits de réception 123 en vue du montage du mécanisme d'appareillage sur la partie avant 120.

Il rapporte alors dans le logement 113 de la partie arrière le mécanisme d'appareillage électrique au travers de l'ouverture de la partie avant 120 créée par l'enlèvement de la portion ouvrable 121 et fixe avec les vis 300 ce mécanisme d'appareillage sur la partie avant 120.

De cette manière, le mécanisme d'appareillage est correctement positionné dans la boîte d'encastrement 100 par rapport à la paroi, c'est-à-dire qu'il est à l'aplomb de la paroi 1 même si la partie arrière 110 de la boîte d'encastrement est positionnée plus ou moins bien dans le trou 2 considéré.

En effet, même si la partie arrière 110 n'est pas bien positionnée dans le trou 2 de la paroi, la partie avant 120 est elle correctement positionnée en appui contre la paroi 1 à l'aplomb de celle-ci et sa position est ajustée par rapport à la partie arrière 110.

Ainsi, l'installateur peut fixer correctement la plaque enjoliveur 130 de l'appareillage électrique sur le mécanisme d'appareillage de façon à ce qu'elle prenne appui sur la paroi 1 en étant à l'aplomb de ladite paroi (voir figure 2E).

La présente invention n'est nullement limitée au mode de réalisation décrit et représenté, mais l'homme du métier saura y apporter toute variante conforme à son esprit.

En particulier, on pourra prévoir selon une variante non représentée que la partie avant de la boîte d'encastrement a une seule portion d'appui sur la paroi considérée. Si cette partie avant présente une forme globalement circulaire, une telle portion d'appui peut être en forme d'anneau ou en forme d'arc de cercle.

On peut également prévoir d'inverser les moyens de clipage décrits précédemment. C'est-à-dire prévoir que la partie arrière porte les pattes munies de crans et que la partie avant comprend les dents et les rainures correspondantes.

## Revendications

1. Boîte d'encastrement (100) d'au moins un appareillage électrique à rapporter sur une paroi (1), comprenant une partie arrière (110) à placer dans un trou (2) pratiqué dans ladite paroi (1), cette partie arrière (110) formant un logement (113) ouvert apte à accueillir au moins un mécanisme d'appareillage électrique, **caractérisée en ce qu'**elle comprend une partie avant (120) apte à être rapportée sur la partie arrière (110), cette partie avant (120) comprenant :
- à sa périphérie, au moins une portion d'appui (122) apte à prendre appui sur la face externe de ladite paroi (1), et
- des moyens de montage (123) dudit mécanisme d'appareillage électrique.

2. Boîte d'encastrement (100) selon la revendication 1, **caractérisée en ce que** la partie avant (120) comporte des orifices (124) traversants pour l'injection dans le trou (2) d'un produit de scellement de ladite boîte d'encastrement.

3. Boîte d'encastrement (100) selon l'une des revendications 1 ou 2, **caractérisée en ce que** la partie arrière (110) et la partie avant (120) comprennent des moyens de montage complémentaires pour le montage de la partie avant (120) sur la partie arrière (110), ces moyens de montage étant aptes à autoriser un ajustement de la position en hauteur et de la position angulaire de la partie avant (120) par rapport à la partie arrière (110).

4. Boîte d'encastrement (100) selon la revendication 3, **caractérisée en ce que** lesdits moyens de montage complémentaires sont des moyens de clipage.

5. Boîte d'encastrement (100) selon la revendication 4, **caractérisée en ce que** lesdits moyens de clipage complémentaires comprennent, sur l'une des deux pièces constituées par la partie arrière (110) et la partie avant (120), des pattes (126) munies de crans et, sur l'autre des deux pièces, des rainures (117) dans lesquelles sont aptes à glisser lesdites pattes (126) munies de crans et des dents (116) aptes à coopérer avec les crans desdites pattes (126).

6. Boîte d'encastrement (100) selon l'une des revendications 1 à 5, **caractérisée en ce que** la partie avant (120) est apte à obturer ledit logement (113) de ladite partie arrière (110) et comporte en son centre une portion ouvrable (121) pour accéder à l'intérieur dudit logement (113) de la partie arrière (110).

7. Boîte d'encastrement (100) selon la revendication 6, **caractérisée en ce que** ladite portion ouvrable (121) de la partie avant (120) comprend un renfoncement (127) formant un logement pour le stockage de vis (300) prévues pour la fixation du mécanisme d'appareillage électrique sur ladite partie avant (120).

8. Boîte d'encastrement (100) selon la revendication 7, **caractérisée en ce que** le renfoncement (127) est obturé par un tampon (128) retirable, imprégné d'un liquide coloré.

9. Boîte d'encastrement (100) selon l'une des revendications 6 à 8, **caractérisée en ce que** ladite portion ouvrable (121) de la partie avant (120) est une portion défonçable.

10. Boîte d'encastrement (100) selon l'une des revendications 1 à 9, **caractérisée en ce que** ladite partie avant (120) comporte à sa périphérie trois portions d'appui (122) disposées en triangle.

11. Boîte d'encastrement (100) selon l'une des revendications 1 à 10, **caractérisée en ce que** chaque portion d'appui se présente sous la forme d'une oreille (122) faisant saillie du bord de la partie avant (120).

12. Boîte d'encastrement (100) selon l'une des revendications 2 à 11, **caractérisée en ce que** lesdits orifices (124) traversants de la partie avant (120) sont situés à la base des portions d'appui (122).

13. Boîte d'encastrement (100) selon l'une des revendications 1 à 12, **caractérisée en ce que** chaque portion d'appui (122) comporte un trou (125) apte à recevoir une pointe d'ancrage pour la fixation de la partie avant (120) à la paroi (1 ).

14. Boîte d'encastrement (100) selon l'une des revendications 1 à 13, **caractérisée en ce que** lesdits moyens de montage dudit mécanisme d'appareillage électrique comprennent des puits (123) de réception de vis (300).

15. Boîte d'encastrement (100) selon la revendication 14, **caractérisée en ce que** lesdits puits (123) sont positionnés sur le bord de la portion ouvrable (121).

16. Boîte d'encastrement (100) selon l'une des revendications 1 à 15, **caractérisée en ce que** la partie arrière (110) et la partie avant (120) sont chacune réalisées d'une seule pièce par moulage d'une matière plastique.

17. Procédé d'encastrement d'un appareillage électrique dans une paroi (1) à l'aide d'une boîte d'encastrement (100), comprenant les étapes selon lesquelles :
a) on réalise un trou (2) dans ladite paroi (1),
b) on positionne dans le trou (2) la partie arrière (110) d'une boîte d'encastrement (100) selon l'une des revendications 2 à 16,
c) on raccorde à ladite partie arrière (110) des gaines (10) d'amenée de câbles et/ou de conducteurs électriques (11 ), et on tire de ces gaines (10) les câbles et/ou les conducteurs électriques (11) pour les insérer dans ledit logement (113) ouvert de ladite partie arrière (110),
d) on rapporte ladite partie avant (120) de la boîte d'encastrement (100) sur ladite partie arrière (110) de telle sorte que chaque portion d'appui (122) de ladite partie avant (120) prend appui sur la paroi (1 ),
e) on injecte, via les orifices (124) traversants de la partie avant (120), le produit de scellement pour sceller la boîte d'encastrement (100) dans le trou de la paroi (1 ),
f) après que ladite paroi a été recouverte d'une couche de revêtement murale, on dégage au moins la portion ouvrable (121) de la partie avant (120) de la boîte d'encastrement (100),
g) on ouvre ladite partie ouvrable (121) pour accéder à l'intérieur dudit logement (113) de la partie arrière (110) contenant les câbles et/ou les conducteurs électriques (11),
h) on rapporte dans le logement (113) de la partie arrière (110) le mécanisme d'appareillage électrique que l'on fixe avec des vis (300) sur la partie avant (120), et
i) on fixe la plaque enjoliveur (130) de l'appareillage électrique de façon à ce qu'elle prenne appui sur la paroi (1).

18. Procédé selon la revendication 17, **caractérisé en ce qu'**à l'étape b) on maintient la partie arrière (110) de la boîte d'encastrement (100) dans le trou (2) pratiqué dans la paroi (1 ) à l'aide d'un produit de collage du type mastic.

19. Procédé selon l'une des revendications 17 ou 18, **caractérisé en ce qu'**à l'étape d) on ajuste la position en hauteur et la position angulaire de la partie avant (120) par rapport à la partie arrière (110) de la boîte d'encastrement (100).

20. Procédé selon l'une des revendications 17 à 19, **caractérisé en ce que** le produit de scellement injecté au travers des orifices (124) de la partie avant (120) est une mousse de polyuréthane.
